# EUROPÄISCHE PATENTSCHRIFT

(11) **EP 2 339 283 B1**
(45) Veröffentlichungstag und Bekanntmachung des Hinweises auf die Patenterteilung: **08.06.2016**
(21) Anmeldenummer: 10015451.7
(22) Anmeldetag: 08.12.2010
(51) Int. Cl.: F28F 1/40, B21C 37/20, B21H 7/18, F28F 1/42, F28F 13/18

(54) **Wärmeübertragerrohr und Verfahren zur Herstellung eines Wärmeübertragerrohrs**
Heat transfer pipe and method for manufacturing same
Tuyau de transfert de chaleur et procédé de fabrication d'un tuyau de transfert de chaleur

(30) Priorität: 22.12.2009 DE 102009060395
(43) Veröffentlichungstag der Anmeldung: 29.06.2011
(73) Patentinhaber: Wieland-Werke AG, 89079 Ulm (DE)
(72) Erfinder: Gotterbarm, Achim, 89160 Dornstadt (DE); Lutz, Ronald, 89143 Blaubeuren (DE); Beutler, Andreas, 89264 Weissenhorn (DE)

(56) Entgegenhaltungen:
- EP-B1- 1 312 885
- JP-A- H10 197 184
- US-A- 5 803 165
- US-A- 5 992 513
- US-B1- 6 412 549

## Beschreibung

Die Erfindung betrifft ein Wärmeübertragerrohr nach dem Oberbegriff des Anspruchs 1 und Verfahren zur Herstellung eines Wärmeübertragerrohrs nach dem Oberbegriff des Anspruchs 8 bzw. Anspruchs 9. Ein solches Rohr und Verfahren sind in EP-B-1312885 offenbart.

Wärmeübertragung tritt in vielen Bereichen der Kälte- und Klimatechnik sowie in der Prozess- und Energietechnik auf. Zur Wärmeübertragung werden in diesen Gebieten häufig Wärmeaustauscher mit Rohren eingesetzt. In vielen Anwendungen strömt hierbei auf der Rohrinnenseite ein flüssiges oder gasförmiges Medium, das abhängig von der Richtung des Wärmestroms abgekühlt oder erwärmt wird. Die Wärme wird an das auf der Rohraußenseite sich befindende Medium abgegeben oder diesem entzogen.

Um den Wärmetransport zwischen dem Wärme abgebenden Medium und dem Wärme aufnehmenden Medium zu ermöglichen, muss die Temperatur des Wärme abgebenden Mediums höher sein als die Temperatur des Wärme aufnehmenden Mediums. Diesen Temperaturunterschied bezeichnet man als treibende Temperaturdifferenz. Je höher die treibende Temperaturdifferenz ist, desto mehr Wärme kann übertragen werden. Andererseits ist man oft bestrebt, die treibende Temperaturdifferenz klein zu halten, da dies Vorteile für die Effizienz des Prozesses hat.

Es ist bekannt, dass durch die Strukturierung der Wärmeübertragungsfläche die Wärmeübertragung intensiviert werden kann. Damit kann erreicht werden, dass pro Einheit der Wärmeübertragungsfläche mehr Wärme übertragen werden kann als bei einer glatten Oberfläche. Ferner ist es möglich, die treibende Temperaturdifferenz zu reduzieren und damit den Prozess effizienter zu gestalten. Bei metallischen Wärmetauscherrohren erfolgt die Strukturierung der Wärmeübertragungsfläche häufig durch das Formen von Rippen oder ähnlichen Elementen aus dem Material der Rohrwand. Diese integral geformten Rippen haben einen festen metallischen Verbund mit der Rohrwand und können somit Wärme optimal übertragen.

Eine oft verwendete Ausführungsform von Wärmetauschern sind Rohrbündelwärmetauscher. In diesen Apparaten werden häufig Rohre eingesetzt, die sowohl auf ihrer Innenseite als auch auf ihrer Außenseite strukturiert sind. Strukturierte Wärmeaustauscherrohre für Rohrbündelwärmeaustauscher besitzen üblicherweise mindestens einen strukturierten Bereich sowie glatte Endstücke und eventuell glatte Zwischenstücke. Die glatten End- bzw. Zwischenstücke begrenzen die strukturierten Bereiche. Damit das Rohr problemlos in den Rohrbündelwärmeaustauscher eingebaut werden kann, darf der äußere Durchmesser der strukturierten Bereiche nicht größer sein als der äußere Durchmesser der glatten End- und Zwischenstücke.

Auf der Innenseite von Rohren werden oft achsparallele oder helixförmige Rippen zur Verbesserung der Wärmeübertragungseigenschaften eingesetzt. Durch die Berippung wird die Innenoberfläche des Rohres vergrößert. Bei helixförmig angeordneten Rippen wird ferner die Turbulenz des im Rohr strömenden Mediums erhöht und somit die Wärmeübertragung verbessert. Es ist bekannt, dass die Wärmeübertragungseigenschaften einer achsparallelen oder helixförmigen Berippung auf der Rohrinnenseite verbessert werden können, indem die Innenrippen mit Kerben oder Nuten versehen werden. Beispiele hierfür sind in EP 1312885 B1, CN 101556124 A, CN 101556125 A, US 5,992,513, US 6,018,963 und US 6,412,549 zu finden. Durch das Kerben der Rippen entsteht eine Struktur mit alternierender Rippenhöhe und lateralen Werkstoffvorsprüngen an der Rippenflanke. Diese Struktur erhöht die Turbulenz des im Rohr strömenden Mediums zusätzlich.

Insbesondere in Anwendungen der Kälte- und Klimatechnik gewinnt die Effizienz der Kälteanlagen im Teillastfall zunehmend an Bedeutung. Im Teillastfall wird oft die Durchflussmenge des Wärmeträgermediums reduziert, weshalb die Geschwindigkeit des im Rohr strömenden Mediums deutlich abnimmt. Da sich dann der Haupanteil des Wärmedurchgangswiderstands auf die Rohrinnenseite verlagert, ist es erforderlich, die heute bekannten Strukturen auf der Rohrinnenseite insbesondere für kleine Strömungsgeschwindigkeiten weiter zu verbessern.

Der Erfindung liegt die Aufgabe zugrunde, ein Wärmeübertragerrohr bezüglich der Wärmeübertragungseigenschaften weiterzubilden sowie ein Verfahren zur Herstellung eines derartigen Wärmeübertragerrohrs anzugeben.

Die Erfindung wird bezüglich eines Wärmeübertragerrohrs durch die Merkmale des Anspruchs 1 wiedergegeben. Des Weiteren wird die Erfindung bezüglich eines Verfahrens zur Herstellung des Wärmeübertragerrohrs durch die Ansprüche 8 und 9 wiedergegeben. Die weiteren rückbezogenen Ansprüche betreffen vorteilhafte Aus- und Weiterbildungen der Erfindung.

Die Erfindung geht dabei von der Überlegung aus, dass sich zur Verbesserung des Wärmeübergangs auf der Rohrinnenseite die Turbulenz des im Rohr strömenden Mediums erhöht und die sich im wandnahen Bereich im Medium bildende laminare Grenzschicht gestört wird. Hierzu dienen speziell geformte Strukturelemente auf der inneren Oberfläche des Rohres, wie beispielsweise achsparallele oder helixförmig umlaufende Innenrippen, die mit zusätzlichen Merkmalen versehen sind. Ein solches Merkmal sind Erhebungen auf der Rippenspitze, die eine im Wesentlichen pyramidenstumpfartige Form aufweisen. Unter pyramidenstumpfartigen Erhebungen auf der Rippenspitze sind auch alle beispielsweise in eine Raumrichtung gelängte Formen, beispielsweise eine Barrenform, zu verstehen. Die Mantelflächen eines Pyramidenstumpfs können dabei auch als gekrümmte Seiten- und Deckflächen ausgebildet sein. Die Erhebungen wiederholen sich in Richtung des Rippenverlaufs in regelmäßigen Intervallen. Im Bereich der Erhebungen haben die Innenrippen ihre maximale Rippenhöhe H2. Der Bereich der Rippenspitze zwischen zwei Erhebungen stellt eine relative Vertiefung dar. Dort haben die Innenrippen ihre minimale. Rippenhöhe H3. Die Rippenhöhe wird jeweils von der Rohrwand aus gemessen. Der Übergang von einer Erhebung zur benachbarten Vertiefung erfolgt durch die geneigte Flanke der pyramidenstumpfartigen Erhebung. Die zur Rippenflanke parallel verlaufenden Seitenflächen einer pyramidenstumpfartigen Erhebung bilden einen nahtlosen Übergang mit der Rippenflanke.

Mit kleiner werdender Strömungsgeschwindigkeit des Mediums wird die laminare Grenzschicht dicker. Wenn die Dicke der laminaren Grenzschicht ungefähr so groß wie die maximale Rippenhöhe ist, dann lässt die Turbulenz steigernde Wirkung der Innenstruktur deutlich nach. Es hat sich gezeigt, dass dieser unerwünschte Effekt verhindert werden kann, wenn die Innenrippen mit Auskragungen an der Rippenspitze versehen werden. Die Auskragungen verlaufen an der Übergangskante einer Rippenflanke zur Rippenspitze hin, indem dort der Übergangsbereich mehr oder weniger in Radialrichtung überhöht wird. Die Rippenspitze bekommt hierdurch eine von der Rippenflanke ausgehende Feinstruktur aufgeprägt. Mit anderen Worten, ein typisches Erscheinungsbild der Auskragungen ist, dass manche Seitenflächen der pyramidenstumpfartigen Erhebungen ohrenartige Formen in Radialrichtung ausbilden, welche die klassische geometrische Form eines Pyramidenstumpfs geringfügig verzerren. In bevorzugter Form sind die erfindungsgemäßen Auskragungen an den geneigten Pyramidenflanken der Erhebungen besonders ausgeprägt, während sie auf der Deckfläche der Erhebungen und in den Bereichen zwischen zwei Erhebungen weniger ausgeprägt sind.

Erzeugt man dagegen Strukturen gemäß den Vorgaben des Standes der Technik aus Druckschrift US 5,992,513, indem man eine zunächst vorgegebene Innenrippe mit Kerben versieht, dann entstehen im Bereich der Kerben laterale Werkstoffvorsprünge an den Flanken der Innenrippen. Je nach Tiefe der Kerbung sind diese Werkstoffvorsprünge unterschiedlich hoch an der Rippenflanke angebracht. Ihr Abstand zur Rohrwandung ist aber immer kleiner als die maximale Höhe der Rippe. Diese lateralen Werkstoffvorsprünge bewirken zusätzliche Turbulenzen in der Strömung, solange die laminare Grenzschicht dünner ist als ihr Abstand von der Rohrwand. Mit kleiner werdender Strömungsgeschwindigkeit und zunehmender Viskosität des Mediums wird die laminare Grenzschicht dicker und die Wirkung der lateralen Werkstoffvorsprünge lässt deutlich nach. Zwischen den Werkstoffvorsprüngen und der Rohrwand können sich in diesen Fällen sogar Bereiche bilden, in denen die Strömung und damit die Wärmeübertragung nahezu zum Erliegen kommen.

Der besondere Vorteil der erfindungsgemäßen Lösung besteht darin, dass die Feinstruktur der Auskragungen im Bereich der Rippenspitze zusätzliche Wirbel erzeugt und so die Turbulenz des im Rohr strömenden Mediums erhöht. Die daraus resultierende Leistungssteigerung tritt besonders bei kleinen Strömungsgeschwindigkeiten zu Tage, da die Auskragungen die Ausbildung der laminaren Grenzschicht verhindern. Durch die Auskragungen wird folglich die Wärmeübertragung stärker intensiviert als bei den aus dem Stand der Technik bekannten Strukturen, die diese Auskragungen in Radialrichtung nicht aufweisen.

In bevorzugter Ausgestaltung der Erfindung kann zumindest eine der Flanken einer pyramidenstumpfartigen Erhebung konkav ausgebildet sein. Diese Seitenflächen weisen dann eine ins Pyramideninnere gerichtete Krümmung auf, durch die auf der Mantelfläche des Pyramidenstumpfes markant vorspringende bzw. schärfere Kantenstrukturen ausgebildet sind. Derartige scharfkantige Strukturen wirken der Ausbildung einer laminaren Strömung entgegen und begünstigen die Wirbelbildung zur Steigerung der Wärmeübertragungseigenschaften zusätzlich.

Vorteilhafterweise können die pyramidenstumpfartigen Erhebungen asymmetrisch ausgebildet sein. So kann die Asymmetrie den Strömungsverhältnissen im Rohrinneren entsprechend angepasst sein, um die Wärmeübertragungseigenschaften weiter zu optimieren. Beispielsweise können die Pyramidenkanten, die der laminaren Strömung am meisten entgegenwirken, entsprechend scharfkantig ausgebildet sein.

Bei einer vorteilhaften Ausführungsform der Erfindung können die pyramidenstumpfartigen Erhebungen die zwischen zwei Erhebungen liegende Vertiefung um 20 % bis 100 % der Höhe der Innenrippen am Ort der Vertiefung überragen. Wenn die Erhebungen die Vertiefungen um weniger als 20% der minimalen Innenrippenhöhe H3 überragen, dann sind die radialen Auskragungen zu wenig ausgeprägt, als dass sie die Strömung signifikant beeinflussen können. Erhebungen, die die Vertiefungen um mehr als 100% der minimalen Innenrippenhöhe H3 überragen, sind schwierig herzustellen. Unerwünschte Belastungen der Werkzeuge, die zu einer nachteiligen Verkürzung der Standzeit führen, wären die Folge. Bei Rohren mit Innendurchmesser zwischen 10 mm und 25 mm beträgt die minimale Höhe H3 der Innenrippen vorzugsweise 0,20 mm bis 0,45 mm, die maximale Höhe H2 der Innenrippen beträgt vorzugsweise mehr als 0,35 mm bis 0,60 mm. Die Erhebungen der Rippenspitze überragen die zwischen zwei Erhebungen liegenden Vertiefungen dann typischerweise um 0,05 mm bis 0,20 mm.

Bevorzugt beträgt der Flankenwinkel a der Erhebungen maximal 120°. Der Flankenwinkel α ist der Winkel, den die geneigten Flanken der pyramidenstumpfartigen Erhebungen auf der Rippenspitze einschließen. Ist der Winkel größer als 120 °, dann bilden die Erhebungen der Rippenspitze eine wellenartige Struktur, welche die Strömung des Mediums nicht ausreichend beeinflusst.

In vorteilhafter Ausgestaltung kann an der Rohraußenseite eine Außenstruktur ausgebildet sein. So besitzt das erfindungsgemäße Wärmeübertragerrohr auf seiner Außenseite eine Strukturierung, welche die Wärmeübertragung auf der Rohraußenseite intensiviert. Vorteilhafterweise kann die Außenstruktur in Form von integralen, schraubenförmig umlaufenden Außenrippen ausgebildet sein. Als integral werden diejenigen Rippentypen bezeichnet, die durch einen Umformprozess aus der Rohrwandung herausgearbeitet werden. Durch die Außenrippen wird die Außenfläche des Rohres beträchtlich vergrößert und die Wärmeübertragung dadurch intensiviert.

Die Erfindung geht beim ersten Verfahren gemäß Anspruch 8 von der Überlegung aus, dass zur Herstellung eines erfindungsgemäßen Wärmeübertragerrohrs eine Vorrichtung verwendet wird, die aus mindestens zwei von einander beabstandeten Drückwerkzeugen besteht, die auf der Außenseite des Rohres angeordnet sind. Die Drückwerkzeuge bestehen aus mehreren Kugeln oder Walzen, die in einer Aufnahme ringförmig positioniert und drehbar gelagert sind. Die Aufnahmen mit den Kugeln oder Walzen sind in einer ortsfesten Vorrichtung untergebracht und können um das Rohr rotiert werden, wobei die Kugeln oder Walzen die Rohrwand in Radialrichtung verformen können. Ferner ist eine separate Ziehvorrichtung vorhanden, mittels derer das Rohr in Axialrichtung durch die Drückwerkzeuge gezogen werden kann.

Zur Bearbeitung des Rohres werden die Drückwerkzeuge um das Rohr rotiert und das Rohr durch die Ziehvorrichtung in Axialrichtung gezogen. Im Arbeitsbereich der Drückwerkzeuge wird die Rohrwand durch die profilierten Walzdorne unterstützt.

Ein weiterer Aspekt der Erfindung schließt ein zweites Verfahren zur Herstellung eines erfindungsgemäßen Wärmeübertragerrohrs gemäß Anspruch 9 ein.

Die Erfindung geht beim zweiten Verfahren von der Überlegung aus, dass zur Herstellung eines erfindungsgemäßen Wärmeaustauscherrohrs eine Vorrichtung verwendet wird, die aus n = 3 oder 4 Werkzeughaltern besteht, in die jeweils mindestens zwei von einander beabstandete Walzwerkzeuge integriert sind. Die Achse jedes Werkzeughalters verläuft schräg zur Rohrachse. Die Werkzeughalter sind jeweils um 360 °/n versetzt am Umfang des Rohres angeordnet. Die Werkzeughalter sind radial zustellbar. Sie sind ihrerseits in einem ortsfesten Walzgerüst angeordnet. Die Walzwerkzeuge bestehen aus mehreren nebeneinander angeordneten Walzscheiben, deren Durchmesser in Richtung des fortschreitenden Umformgrads der Außenrippen ansteigt.

Zur Bearbeitung des Rohres werden die am Umfang angeordneten, rotierenden Walzwerkzeuge auf das Glattrohr radial zugestellt und mit dem Glattrohr in Eingriff gebracht. Das Glattrohr wird dadurch in Drehung um seine Achse versetzt. Da die Achsen der Walzwerkzeuge zur Rohrachse schräg gestellt sind, formen die Walzwerkzeuge schraubenlinienförmig umlaufende Außenrippen aus dem Wandmaterial des Glattrohrs und schieben gleichzeitig das entstehende Rippenrohr entsprechend der Steigung der schraubenlinienförmig umlaufenden Außenrippen vor. Die ersten Walzwerkzeuge auf jedem Werkzeughalter beginnen mit der Formung der Außenrippen, die weiteren Walzwerkzeuge auf jedem Werkzeughalter führen die weitere Formung der Außenrippen fort. Der Abstand zwischen zwei Walzwerkzeugen muss so angepasst sein, dass die Walzscheiben des nachfolgenden Walzwerkzeugs in die Nuten greifen, die zwischen den vom vorangegangenen Walzwerkzeug geformten Außenrippen sind.

Der längs zur Rohrachse gemessene Abstand der Mitten zweier benachbarter Außenrippen wird als Rippenteilung p bezeichnet. Die Rippenteilung beträgt üblicherweise zwischen 0,4 und 2,2 mm. Die Außenrippen laufen vorzugsweise wie ein mehrgängiges Gewinde um. Im Arbeitsbereich der Walzwerkzeuge wird die Rohrwand durch die profilierten Walzdorne unterstützt.

Im Folgenden werden Verfahrensaspekte, die dem ersten und zweiten Verfahren gemeinsam angehören, weiter erläutert. So sind ebenfalls Bestandteil beider Vorrichtungen zwei unterschiedlich profilierte Walzdorne. Diese sind hintereinander und koaxial an einer Stange angebracht und auf dieser drehbar gelagert. Die gemeinsame Achse der Walzdorne ist identisch mit der Achse der Stange und fällt mit der Rohrachse zusammen.

Die Stange ist im ersten Verfahren durch eine geeignete Haltevorrichtung so fixiert, dass die Walzdorne im Arbeitsbereich der Drückwerkzeuge positioniert werden. Die Stange ist im zweiten Verfahren an ihrem anderen Ende am Walzgerüst selbst befestigt. Mittels der Stange werden die Walzdorne im Arbeitsbereich der Walzwerkzeuge positioniert. Hierbei wird der in Richtung des fortschreitenden Umformgrads erste Walzdorn im Arbeitsbereich des in Richtung des fortschreitenden Umformgrads ersten Drückwerkzeugs bzw. Walzwerkzeugs positioniert, während der in Richtung des fortschreitenden Umformgrads zweite Walzdorn im Arbeitsbereich der in Richtung des fortschreitenden Umformgrads nachfolgenden Drückwerkzeuge bzw. Walzwerkzeuge positioniert wird. Der Außendurchmesser des zweiten Walzdorns ist etwas kleiner als der des ersten Walzdorns.

Das Profil der Walzdorne besteht üblicherweise aus mehreren, im Wesentlichen trapezförmigen Nuten, die parallel zueinander auf der Außenfläche des Walzdorns angeordnet sind. Der Flankenwinkel der Nuten des ersten Walzdorns wird mit β1 bezeichnet. Die Nuten des ersten Walzdorns verlaufen unter einem Drallwinkel von 0° bis 60° zur Achse des Walzdorns und weisen eine Tiefe T1 auf. Der Flankenwinkel der Nuten des zweiten Walzdorns wird mit β2 bezeichnet. Die Nuten des zweiten Walzdorns verlaufen unter einem Drallwinkel von 0° bis 45°, vorzugsweise von 25° bis 45°, zur Achse des Walzdorns und weisen eine Tiefe T2 auf. Die Tiefe T2 der Nuten des zweiten Walzdorns ist deutlich größer als die Tiefe T1 der Nuten des ersten Walzdorns. Die Drallwinkel der Walzdorne sind so gewählt, dass sich ein Zwischenwinkel von mindestens 40° ergibt. Vorteilhafterweise liegt der Zwischenwinkel zwischen 70° und 100°. Vorzugsweise sind die Nuten des ersten Walzdorns gegensinnig zu den Nuten des zweiten Walzdornes verdrallt, um den gewünschten Zwischenwinkel zu realisieren.

Im ersten Umformbereich wird durch die radialen Kräfte des ersten Drückwerkzeugs bzw. des ersten Walzwerkzeugs das Material der Rohrwand in die Nuten des ersten Walzdorns gepresst. Dadurch wird eine Innenstruktur in Form von achsparallelen oder helixförmigen Innenrippen auf der Innenoberfläche des Rohres geformt. Der gegen die Rohrachse gemessene Drallwinkel der Innenrippen ist gleich dem Drallwinkel der Nuten des ersten Walzdorns. Die von der Rohrwand aus gemessene Höhe H1 der in diesem ersten Umformschritt gebildeten Innenrippen beträgt vorzugsweise zwischen 0,05 mm und 0,20 mm. Somit ist diese Innenstruktur relativ schwach ausgeprägt. Die Höhe H1 der im ersten Umformschritt gebildeten Innenrippen ist ungefähr so groß wie, aber nicht größer als die Tiefe T1 der Nuten des ersten Walzdorns. Es kann zweckmäßig sein, die Nuten des ersten Walzdorns vollständig mit Material zu füllen. In diesem Fall ist die Höhe H1 der im ersten Umformschritt gebildeten Innenrippen so groß wie die Tiefe T1 der Nuten des ersten Walzdorns.

Der Außendurchmesser des zweiten Walzdorns muss kleiner sein als der lichte Innendurchmesser des Rohres nach der Formung der ersten Innenrippen. Der lichte Innendurchmesser des Rohres nach der Formung der ersten Innenrippen ist ungefähr gleich dem Außendurchmesser des ersten Walzdorns abzüglich der doppelten Höhe H1 der im ersten Walzschritt gebildeten Innenstruktur.

Im zweiten Umformbereich wird durch die radialen Kräfte der weiteren Drückwerkzeuge bzw. Walzwerkzeuge das Material der Rohrwand und der im ersten Umformbereich gebildeten Innenrippen in die Nuten des zweiten Walzdorns gepresst. Dadurch werden achsparallele oder helixförmige, kontinuierlich verlaufende Innenrippen auf der Innenoberfläche des Rohres neu geformt. Der gegen die Rohrachse gemessene Drallwinkel dieser neu geformten Innenrippen ist gleich dem Drallwinkel der Nuten des zweiten Walzdorns. Da die Drallwinkel der Walzdorne so gewählt werden, dass sie einen Winkel von mindestens 40° einschließen, wird das Material der im ersten Umformschritt gebildeten Innenrippen in regelmäßigen, durch die Profilierung des zweiten Walzdorn vorgegebenen Intervallen wieder verformt. Ein Teil dieses verformten Materials bildet an der Spitze der im zweiten Umformschritt gebildeten Innenrippen die erfindungsgemäßen Auskragungen in Radialrichtung. Die im zweiten Umformschritt nicht verformten Bereiche der im ersten Walzschritt geformten Innenrippen bilden pyramidenstumpfartige Erhebungen auf der Spitze der im zweiten Walzschritt gebildeten Innenrippen. Dieses Herstellungsverfahren bewirkt, dass die erfindungsgemäßen Auskragungen in Radialrichtung an den geneigten Flanken der pyramidenstumpfartigen Erhebungen besonders ausgeprägt sind, während sie auf der Spitze der Erhebungen und in den Bereichen zwischen zwei Erhebungen weniger ausgeprägt sind.

Um die im zweiten Umformschritt erwünschte Formung der neuen Innenrippen aus dem Material der Rohrwand zu ermöglichen, muss die Tiefe T2 der Nuten des zweiten Walzdorns deutlich größer sein als die Höhe H1 der im ersten Umformschritt gebildeten Innenrippen. Dies ermöglicht, dass die im zweiten Umformschritt gebildeten Innenrippen stärker ausgeprägt werden können als die Innenstruktur des ersten Umformschritts. Die Tiefe T2 der Nuten des zweiten Walzdorns muss mindestens so groß sein wie die angestrebte maximale Höhe H2 der neuen Innenrippen. Je nach Anzahl und Höhe der Innenrippen kann die Innenoberfläche des fertigen Rohres die Innenoberfläche des unverformten Glattrohres um bis zu 100% übertreffen.

In bevorzugter Ausgestaltung der Erfindung kann durch die im ersten Umformbereich gebildete Innenstruktur die Innenoberfläche des Rohres mit dieser Innenstruktur um mindestens 4% und maximal um 30% gegenüber der Innenoberfläche des unverformten Glattrohrs vergrößert werden. Somit ist diese Innenstruktur relativ schwach ausgeprägt.

In weiterer bevorzugter Ausgestaltung der Erfindung kann die Tiefe T2 der Nuten des zweiten Walzdorns mindestens 2,5 fach so groß sein wie die Tiefe T1 der Nuten des ersten Walzdorns Dies ermöglicht, dass die im zweiten Walzschritt gebildeten Innenrippen eine deutlich größere maximale Rippenhöhe H2 erreichen können als die Höhe H1 der Innenstruktur des ersten Walzschritts.

In bevorzugter Ausgestaltung der Erfindung kann der Flankenwinkel (Öffnungswinkel) der Nuten des ersten Walzdornes maximal 120° betragen. Dadurch kann eine bevorzugte Ausgestaltung der pyramidenstumpfartigen Erhebungen der Rippenspitzen erreicht werden.

Ausführungsbeispiele der Erfindung werden anhand der schematischen Zeichnungen näher erläutert.

Darin zeigen:
- Fig. 1: eine durch Schattierungen hervorgehobene Schrägansicht der Rohrinnenstruktur mit Rippen und pyramidenstumpfartigen Erhebungen,
- Fig. 2: eine schematische Schrägansicht der Rohrinnenstruktur nach Fig. 1,
- Fig. 3: eine Detailansicht einer pyramidenstumpfartigen Erhebung an der Rippenspitze,
- Fig. 4: eine durch Schattierungen hervorgehobene Schrägansicht der Rohrinnenstruktur mit Rippen und asymmetrischen pyramidenstumpfartigen Erhebungen,
- Fig. 5: eine schematische Schrägansicht der asymmetrischen Rohrinnenstruktur nach Fig. 4,
- Fig. 6: eine Detailansicht einer asymmetrischen pyramidenstumpfartigen Erhebung an der Rippenspitze,
- Fig. 7: schematisch eine Ansicht der Vorrichtung zur Herstellung eines außenberippten Wärmeübertragerrohrs mit Innendornen,
- Fig. 8: schematisch eine Schrägansicht der Vorrichtung zur Herstellung eines außenberippten Wärmeübertragerrohrs mit äußerem Walzwerkzeug und Innendornen, und
- Fig. 9: Diagramm zur Verbesserung des inneren Wärmeübergangs durch die erfinderische Lösung.

Einander entsprechende Teile sind in allen Figuren mit denselben Bezugszeichen versehen.

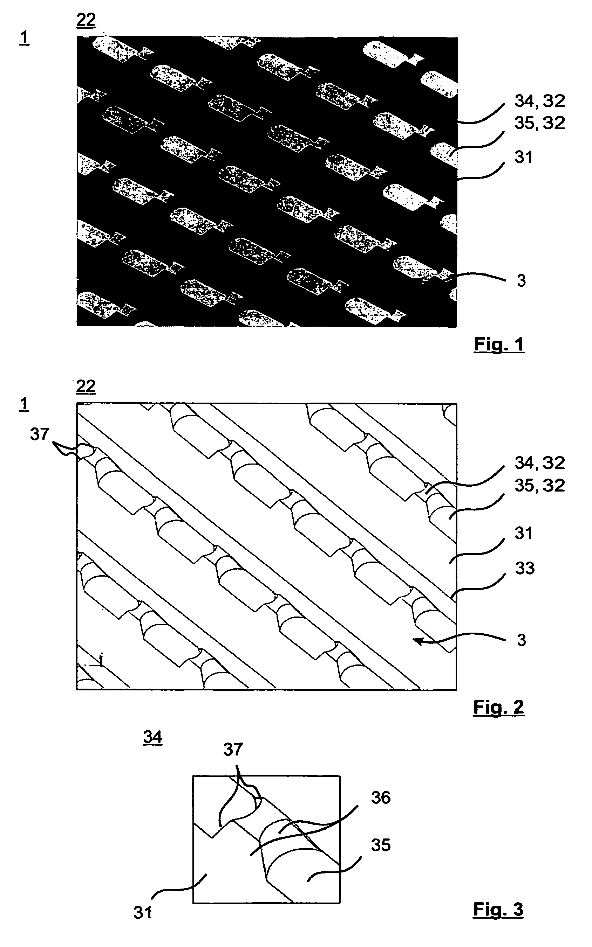

Fig. 1 zeigt eine durch Grauschattierungen hervorgehobene Schrägansicht der Struktur der Rohrinnenseite 22 eines Wärmeübertragerrohrs 1 mit Innenrippen 3 und pyramidenstumpfartigen Erhebungen 34. Fig. 2 zeigt eine schematische Schrägansicht der Rohrinnenstruktur nach Fig. 1.

Auf der Rohrinnenseite 22 sind kontinuierlich verlaufende, helixförmig umlaufende Innenrippen 3 geformt, wobei jede Innenrippe 3 zwei Rippenflanken 31 und eine Rippenspitze 32 hat. Zwischen jeweils benachbarten Innenrippen 3 ist eine sich kontinuierlich erstreckende Nut 33 gebildet. Die Rippenspitze 32 weist in regelmäßigen Intervallen sich wiederholende Erhebungen 34 auf, die eine im Wesentlichen pyramidenstumpfartige Form haben. Die Rippenflanken 31 der Innenrippen 3 sind an der Konturlinie, welche durch die Übergangskante einer Rippenflanke 31 zur Rippenspitze 32 definiert wird, überhöht. Fig. 3 zeigt eine Detailansicht einer pyramidenstumpfartigen Erhebung 34 an der Rippenspitze 32 mit in diesem Bereich an der Konturlinie aus der Rippenflanke 31 herausgeformten Auskragungen 37 in Radialrichtung.

In Fig. 3 sind zwei Flanken 36 der dargestellten pyramidenstumpfartigen Erhebung 34 konkav ausgebildet. Diese Flanken 36 sind auch Teil der Rippenspitze 32 und weisen eine ins Pyramideninnere gerichtete Krümmung auf, durch die auf der Mantelfläche des Pyramidenstumpfes markant vorspringende bzw. schärfere Kantenstrukturen in Form von Auskragungen 37 in Radialrichtung ausgebildet sind. Zwischen Erhebungen 34 ist die Rippenspitze 32 in Form einer Vertiefung 35 ausgestaltet. Die scharfkantigen Strukturen wirken begünstigend auf die Wirbelbildung zur Steigerung der Wärmeübertragungseigenschaften.

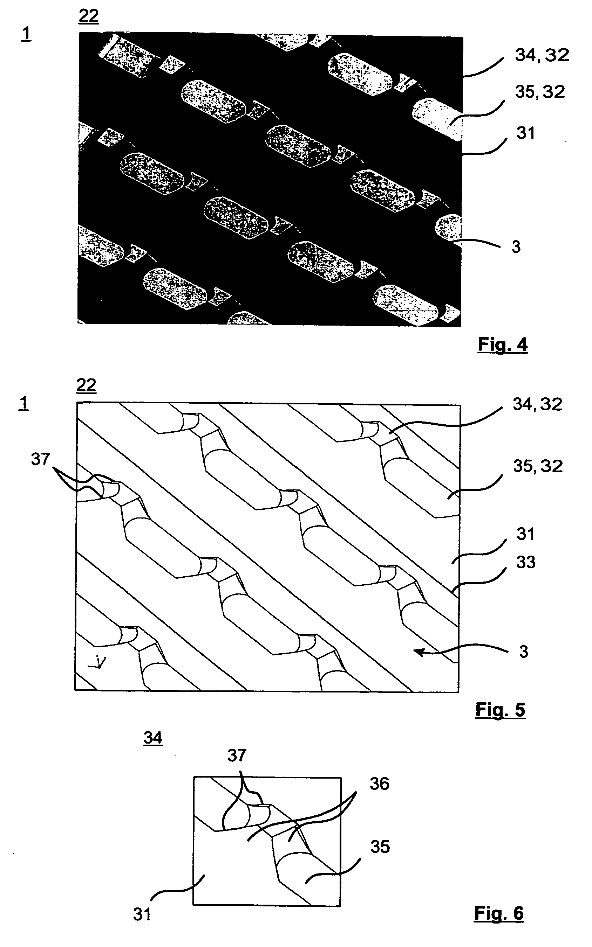

Die Fig. 4 bis 6 zeigen wiederum eine durch Grauschattierungen hervorgehobene Schrägansicht der Struktur der Rohrinnenseite 22 eines Wärmeübertragerrohrs 1 mit Innenrippen 3 und pyramidenstumpfartigen Erhebungen 34. Fig. 5 zeigt eine schematische Schrägansicht der Rohrinnenstruktur nach Fig. 4. In den Fig. 4 bis 6 sind die pyramidenstumpfartigen Erhebungen 34 asymmetrisch ausgebildet.

In Fig. 6 sind wiederum zwei Flanken 36 der dargestellten pyramidenstumpfartigen Erhebung 34 konkav ausgebildet. Diese Flanken 36 sind auch Teil der Rippenspitze 32 und weisen eine ins Pyramideninnere gerichtete Krümmung auf, durch die auf der Mantelfläche des Pyramidenstumpfes markant vorspringende bzw. schärfere Kantenstrukturen in Form von Auskragungen 37 in Radialrichtung ausgebildet sind. Durch die Asymmetrie bilden sich durch die Auskragungen 37 in Radialrichtung den Strömungsverhältnissen im Rohrinneren entsprechend angepasste scharfkantige Strukturen, die eine Wirbelbildung begünstigen.

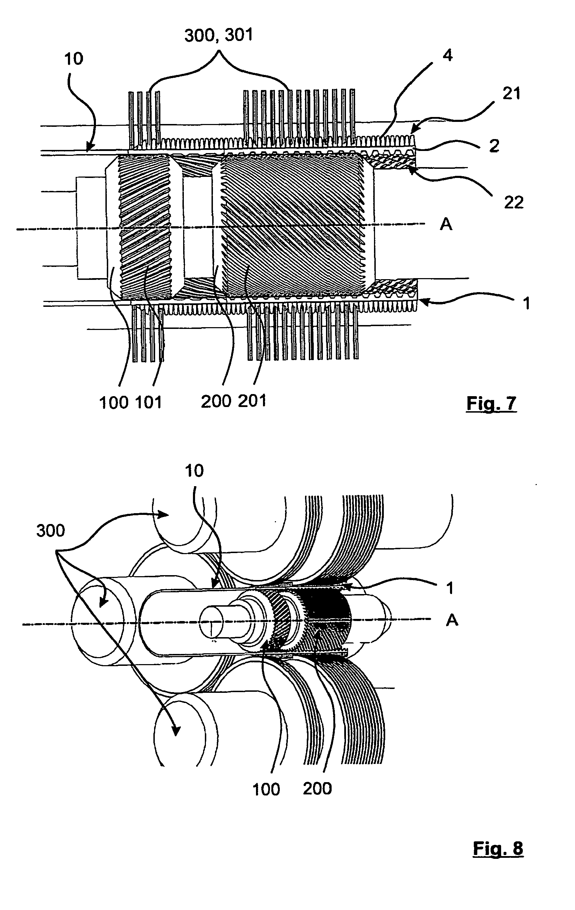

Fig. 7 zeigt eine Ansicht einer Vorrichtung zur Herstellung eines außenberippten Wärmeübertragerrohrs 1 mit zwei Walzdornen 100 und 200. Fig. 8 zeigt eine Schrägansicht der Vorrichtung zur Herstellung eines außenberippten Wärmeübertragerrohrs mit äußerem Walzwerkzeug und Innendornen entsprechend Fig. 7. Beim Herstellungsverfahren eines erfindungsgemäßen Wärmeübertragerrohrs 1 werden auf der Außenseite eines Glattrohres 10 in einem ersten Umformbereich schraubenlinienförmig verlaufende Außenrippen 4 geformt, indem das Rippenmaterial durch Verdrängen von Material aus der Rohrwandung 2 mittels einem aus Walzscheiben 301 aufgebauten Walzwerkzeugs 300 in einem ersten Walzschritt gewonnen wird. Das entstehende Rippenrohr wird durch die Walzkräfte in Drehung versetzt und entsprechend den entstehenden schraubenlinienförmigen Außenrippen 4 vorgeschoben. Die Rohrwandung 2 wird im ersten Umformbereich durch einen im Rohr liegenden ersten Walzdorn 100 abgestützt, der drehbar gelagert ist und auf seiner Dornaußenfläche 101 achsparallele oder helixförmige Nuten der Tiefe T1 aufweist, wobei eine relativ schwach ausgeprägte Innenstruktur gebildet wird, indem Material der Rohrwandung 2 in die Nuten des ersten Walzdorns 100 gepresst wird.

In einem zweiten Walzschritt werden die Außenrippen 4 auf der Rohraußenseite 21 in einem vom ersten Umformbereich beabstandeten zweiten Umformbereich mit weiter ansteigender Höhe ausgebildet, die Rohrwandung 2 wird im zweiten Umformbereich durch einen im Rohr liegenden zweiten Walzdorn 200 abgestützt, der ebenfalls drehbar gelagert ist und auf seiner Dornaußenfläche 201 helixförmige Nuten der Tiefe T2 aufweist, wobei helixförmige, kontinuierlich verlaufende Innenrippen 3 auf der Rohrinnenseite 22 neu geformt werden, indem Material der Rohrwandung 2 und Material der im ersten Walzschritt gebildeten Innenstruktur in die Nuten des zweiten Walzdorns 200 gepresst wird. Die im zweiten Umformbereich gebildeten Innenrippen sind deutlich stärker ausgeprägt als die Innenstruktur, die im ersten Umformbereich geformt wurde. Die Erhebungen 34 auf der Spitze dieser Innenrippen 3 werden aus Material gebildet, das im ersten Umformbereich in die Nuten des ersten Walzdorns 100 gepresst wurde.

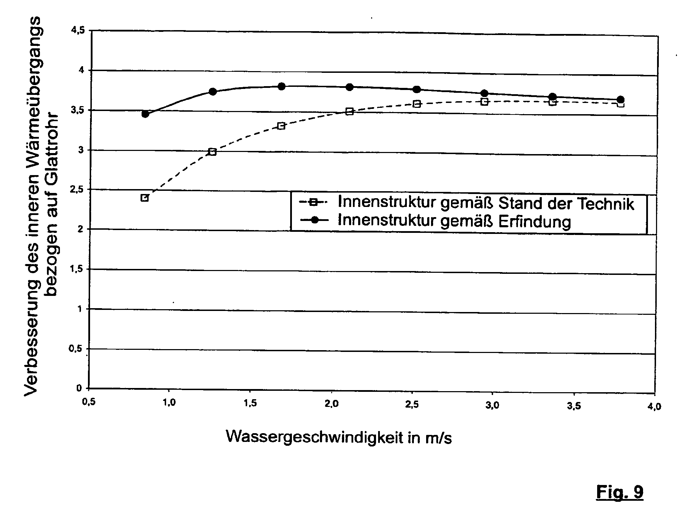

Fig. 9 zeigt ein Diagramm, das den Leistungsvorteil der erfindungsgemäßen Innenstruktur dokumentiert. Am Beispiel von Rohren mit Innendurchmesser 16 mm ist die Verbesserung des inneren Wärmeübergangs bezogen auf ein Glattrohr als Funktion der Geschwindigkeit des im Rohr strömenden Wassers dargestellt. Die mittlere Temperatur des Wassers beträgt dabei 9°C. Es ist im Diagramm sowohl das Leistungsverhalten eines Rohres nach dem Stand der Technik als auch das Leistungsverhalten eines Rohres mit erfindungsgemäßer Innenstruktur dargestellt. Im Vergleichsrohr sind Strukturen gemäß den Vorgaben des Standes der Technik aus Druckschrift US 5,992,513 realisiert. Man erkennt, dass die erfindungsgemäße Innenstruktur für Wassergeschwindigkeiten kleiner 2 m/s signifikante Leistungssteigerungen gegenüber dem Rohr nach dem Stand der Technik aufweist. Bei Wassergeschwindigkeiten kleiner 1 m/s beträgt der Vorteil ca. 40%.

### Bezugszeichenliste

- 1: Wärmeübertragerrohr
- 2: Rohrwandung
- 21: Rohraußenseite
- 22: Rohrinnenseite
- 3: Innenrippen
- 31: Rippenflanken
- 32: Rippenspitze
- 33: Nut
- 34: Erhebungen
- 35: Vertiefung
- 36: Flanken einer Erhebung
- 37: Auskragungen
- 4: Außenrippen
- 10: Glattrohr
- 100: erster Walzdorn
- 101: Dornaußenfläche des ersten Walzdorns
- 200: zweiter Walzdorn
- 201: Dornaußenfläche des zweiten Walzdorns
- 300: Walzwerkzeug
- 301: Walzscheiben

- α: Flankenwinkel der Erhebungen
- β1: Flankenwinkel der Nuten des ersten Walzdorns
- β2: Flankenwinkel der Nuten des zweiten Walzdorns
- T1: Nutentiefe im ersten Walzdorn
- T2: Nutentiefe im zweiten Walzdorn
- A: Rohrachse

## Patentansprüche

1. Wärmeübertragerrohr (1) mit einer Rohrachse (A), einer Rohrwandung (2), einer Rohraußenseite (21) und einer Rohrinnenseite (22), wobei
- auf der Rohrinnenseite (22) aus der Rohrwandung (2) kontinuierlich verlaufende, achsparallele oder helixförmig umlaufende Innenrippen (3) geformt sind,
- jede Innenrippe (3) zwei Rippenflanken (31) und eine Rippenspitze (32) hat,
- zwischen jeweils benachbarten Innenrippen (3) eine sich kontinuierlich erstreckende Nut (33) gebildet ist,
- die Rippenspitze (32) in regelmäßigen Intervallen sich wiederholende Erhebungen (34) aufweist, und
- die Erhebungen (34) eine im Wesentlichen pyramidenstumpfartige Form haben,
**dadurch gekennzeichnet,**
- **dass** die Rippenflanken (31) der Innenrippen (3) an der Konturlinie, welche durch die Übergangskante einer Rippenflanke (31) zur Rippenspitze (32) definiert wird, in Radialrichtung überhöht sind, indem im Bereich der Übergangskante sich aus der Rippenflanke (31) fortsetzende Auskragungen (37) ausgebildet sind,
- **dass** die Auskragungen (37) an den geneigten Flanken (36) der Erhebungen (34) in Richtung des Verlaufs der Innenrippen (3) ausgeprägt sind und
- **dass** die zur Rippenflanke (31) parallel verlaufenden Seitenflächen einer pyramidenstumpfartigen Erhebung (34) einen nahtlosen Übergang mit der Rippenflanke (31) bilden.

2. Wärmeübertragerrohr (1) nach Anspruch 1, **dadurch gekennzeichnet, dass** zumindest eine der Flanken (36) einer pyramidenstumpfartigen Erhebung (34) konkav ausgebildet ist.

3. Wärmeübertragerrohr (1) nach Anspruch 1 oder 2, **dadurch gekennzeichnet, dass** die pyramidenstumpfartigen Erhebungen (34) asymmetrisch ausgebildet sind.

4. Wärmeübertragerrohr (1) nach einem der Ansprüche 1 bis 3, **dadurch gekennzeichnet, dass** die pyramidenstumpfartigen Erhebungen (34) die zwischen zwei Erhebungen (34) liegende Vertiefung (35) um 20 % bis 100 % der Höhe der Innenrippen (3) am Ort der Vertiefung (35) überragen.

5. Wärmeübertragerrohr (1) nach einem der Ansprüche 1 bis 4, **dadurch gekennzeichnet, dass** der Flankenwinkel α der Erhebungen (34) maximal 120° beträgt.

6. Wärmeübertragerrohr (1) nach einem der Ansprüche 1 bis 5, **dadurch gekennzeichnet, dass** auf der Rohraußenseite (21) eine Außenstruktur (4) ausgebildet ist.

7. Wärmeübertragerrohr (1) nach einem der Ansprüche 1 bis 6, **dadurch gekennzeichnet, dass** die Außenstruktur (4) in Form von integralen, schraubenförmig umlaufenden Außenrippen ausgebildet ist.

8. Verfahren zur Herstellung eines Wärmeübertragerrohrs (1) nach einem der Ansprüche 1 bis 5, bei dem folgende Verfahrenschritte durchgeführt werden:
a. die Wandung eines Glattrohres (10) wird in einem ersten Umformbereich durch ein erstes, auf der Außenseite des Glattrohrs umlaufendes Drückwerkzeug radial verformt,
b. die Rohrwandung wird im ersten Umformbereich durch einen im Rohr liegenden ersten Walzdorn (100) abgestützt, der drehbar gelagert ist und auf seiner Dornaußenfläche (101) achsparallele oder helixförmige Nuten der Tiefe T1 aufweist, wobei eine Innenstruktur gebildet wird, indem Material der Rohrwandung in die Nuten des ersten Walzdorns (100) gepresst wird,
c. die Wandung des Glattrohres wird in einem zweiten Umformbereich durch ein zweites, auf der Außenseite des Glattrohrs umlaufendes Drückwerkzeug radial verformt,
d. die Rohrwandung wird im zweiten Umformbereich durch einen im Rohr liegenden zweiten Walzdorn (200) abgestützt, der ebenfalls drehbar gelagert ist und auf seiner Dornaußenfläche (201) achsparallele oder helixförmige Nuten der Tiefe T2 aufweist, wobei achsparallele oder helixförmige, kontinuierlich verlaufende Innenrippen neu geformt werden, indem Material der Rohrwandung und Material der im ersten Umformbereich gebildeten Innenstruktur in die Nuten des zweiten Walzdorns (200) gepresst wird, wobei die im zweiten Umformbereich gebildeten Innenrippen deutlich stärker ausgeprägt sind als die Innenstruktur, die im ersten Umformbereich geformt wurde, wobei die Erhebungen (34) auf der Spitze dieser Innenrippen aus Material gebildet werden, das im ersten Umformbereich in die Nuten des ersten Walzdorns (100) gepresst wurde, und wobei ein Teil des im zweiten Umformbereich verformten Materials der im ersten Umformbereich gebildeten Innenstruktur die sich aus der Rippenflanke (31) fortsetzenden Auskragungen (37) an der Spitze der im zweiten Umformschritt gebildeten Innenrippen (3) bildet, und
e. durch eine Ziehvorrichtung wird der axiale Transport des Rohres durch die Umformbereiche gewährleistet.

9. Verfahren zur Herstellung eines Wärmeübertragerrohrs (1) nach Anspruch 6 oder 7, bei dem folgende Verfahrenschritte durchgeführt werden:
a. auf der Außenseite eines Glattrohres (10) werden in einem ersten Umformbereich schraubenlinienförmig verlaufende Außenrippen (4) geformt, indem das Rippenmaterial durch Verdrängen von Material aus der Rohrwandung mittels eines ersten Walzschritts gewonnen wird und das entstehende Rippenrohr durch die Walzkräfte in Drehung versetzt und entsprechend den entstehenden schraubenlinienförmigen Außenrippen (4) vorgeschoben wird, wobei die Außenrippen (4) mit ansteigender Höhe aus dem sonst unverformten Glattrohr (10) ausgeformt werden,
b. die Rohrwandung wird im ersten Umformbereich durch einen im Rohr liegenden ersten Walzdorn (100) abgestützt, der drehbar gelagert ist und auf seiner Dornaußenfläche achsparallele oder helixförmige Nuten der Tiefe T1 aufweist, wobei eine Innenstruktur gebildet wird, indem Material der Rohrwandung in die Nuten des ersten Walzdorns (100) gepresst wird,
c. in einem zweiten Walzschritt werden die Außenrippen (4) in einem vom ersten Umformbereich beabstandeten zweiten Umformbereich mit weiter ansteigender Höhe ausgebildet,
d. die Rohrwandung (2) wird im zweiten Umformbereich durch einen im Rohr liegenden zweiten Walzdorn (200) abgestützt, der ebenfalls drehbar gelagert ist und auf seiner Dornaußenfläche (201) achsparallele oder helixförmige Nuten der Tiefe T2 aufweist, wobei achsparallele oder helixförmige, kontinuierlich verlaufende Innenrippen neu geformt werden, indem Material der Rohrwandung (2) und Material der im ersten Walzschritt gebildeten Innenstruktur in die Nuten des zweiten Walzdorns (200) gepresst wird, wobei die im zweiten Umformbereich gebildeten Innenrippen deutlich stärker ausgeprägt sind als die Innenstruktur, die im ersten Umformbereich geformt wurde, wobei die Erhebungen (34) auf der Spitze dieser Innenrippen (3) aus Material gebildet werden, das im ersten Umformbereich in die Nuten des ersten Walzdorns (100) gepresst wurde und wobei ein Teil des im zweiten Umformbereich verformten Materials der im ersten Umformbereich gebildeten Innenstruktur die sich aus der Rippenflanke (31) fortsetzenden Auskragungen (37) an der Spitze der im zweiten Umformschritt gebildeten Innenrippen (3) bildet.

10. Verfahren nach Anspruch 8 oder 9 **dadurch gekennzeichnet, dass** durch die im ersten Umformbereich gebildete Innenstruktur die Innenoberfläche des Rohres mit dieser Innenstruktur um mindestens 4% und maximal um 30% gegenüber der Innenoberfläche des unverformten Glattrohrs (10) vergrößert wird.

11. Verfahren nach Anspruch 8 oder 9 **dadurch gekennzeichnet, dass** die Tiefe T2 der Nuten des zweiten Walzdorns (200) mindestens 2,5 fach so groß ist wie die Tiefe T1 der Nuten des ersten Walzdorns (100).

12. Verfahren nach Anspruch 8 oder 9 **dadurch gekennzeichnet, dass** der Flankenwinkel der Nuten des ersten Walzdornes (100) maximal 120° beträgt.

## Claims

1. Heat transfer pipe (1) having a pipe axis (A), a pipe wall (2), a pipe outer side (21) and a pipe inner side (22), wherein
- on the pipe inner side (22), continuously extending, axially parallel or helically extending inner ribs (3) are formed from the pipe wall (2),
- each inner rib (3) has two rib flanks (31) and a rib tip (32),
- a continuously extending groove (33) is formed between adjacent inner ribs (3), respectively,
- the rib tip (32) has at regular intervals repetitive protrusions (34), and
- the protrusions (34) have a substantially truncated-pyramid-like form,
**characterised in that**,
the rib flanks (31) of the inner ribs (3) on the contour line which is defined by the transition edge of a rib flank (31) to the rib tip (32) are raised in a radial direction by continuous projections (37) being formed in this region from the rib flank (31).

2. Heat transfer pipe (1) according to claim 1, **characterised in that** at least one of the flanks (36) of a truncated-pyramid-like protrusion (34) is constructed in a concave manner.

3. Heat transfer pipe (1) according to claim 1 or claim 2, **characterised in that** the truncated-pyramid-like protrusions (34) are constructed in an asymmetrical manner.

4. Heat transfer pipe (1) according to any one of claims 1 to 3, **characterised in that** the truncated-pyramid-like protrusions (34) project beyond the recess (35) which is located between two protrusions (34) by from 20% to 100% of the height of the inner ribs (3) at the location of the recess (35).

5. Heat transfer pipe (1) according to any one of claims 1 to 4, **characterised in that** the flank angle α of the protrusions (34) is a maximum of 120°.

6. Heat transfer pipe (1) according to any one of claims 1 to 5, **characterised in that** an outer structure (4) is formed on the pipe outer side (21).

7. Heat transfer pipe (1) according to any one of claims 1 to 6, **characterised in that** the outer structure (4) is constructed in the form of integral helically extending outer ribs.

8. Method for producing a heat transfer pipe (1) according to any one of claims 1 to 5, wherein the following method steps are carried out:
a. the wall of a smooth pipe (10) is radially deformed in a first deformation region by a first pressing tool which extends on the outer side of the smooth pipe,
b. the pipe wall is supported in the first shaping region by a first roller mandrel (100) which is located in the pipe and which is rotatably supported and which has on the mandrel outer face (101) thereof axially parallel or helical grooves having a depth T1, wherein an inner structure is formed by material of the pipe wall being pressed into the grooves of the first roller mandrel (100),
c. the wall of the smooth pipe is radially deformed in a second deformation region by a second pressing tool which extends at the outer side of the smooth pipe,
d. the pipe wall is supported in the second shaping region by a second roller mandrel (200) which is located in the pipe and which is also rotatably supported and which has on the mandrel outer face (201) thereof axially parallel or helical grooves having the depth T2, wherein axially parallel or helical continuously extending inner ribs are newly formed by material of the pipe wall and material of the inner structure which is formed in the first shaping region being pressed into the grooves of the second roller mandrel (200), wherein the inner ribs formed in the second shaping region are significantly more powerfully pronounced than the inner structure which was formed in the first shaping region, and wherein the protrusions (34) at the tip of these inner ribs are formed from material which was pressed in the first shaping region into the grooves of the first roller mandrel (100), and
e. the axial transport of the pipe through the shaping region is ensured by means of a pulling device.

9. Method for producing a heat transfer pipe (1) according to claim 6 or claim 7, wherein the following method steps are carried out:
a. at the outer side of a smooth pipe (10), in a first shaping region, helically extending outer ribs (4) are formed by the rib material being obtained by displacing material from the pipe wall by means of a first rolling step and the ribbed pipe which is produced being displaced in terms of rotation by means of the rolling forces and being pushed forward in accordance with the helical outer ribs (4) produced, wherein the outer ribs (4) are formed with increasing height from the otherwise non-formed smooth pipe (10),
b. the pipe wall is supported in the first shaping region by means of a first roller mandrel (100) which is located in the pipe and which is rotatably supported and which has on the mandrel outer face thereof axially parallel or helical grooves having the depth T1, wherein an inner structure is formed by material of the pipe wall being pressed into the grooves of the first roller mandrel (100),
c. in a second rolling step, the outer ribs (4) are formed in a second shaping region which is spaced apart from the first shaping region and which has further increasing height,
d. the pipe wall (2) is supported in the second shaping region by a second roller mandrel (200) which is located in the pipe and which is also rotatably supported and which has on the mandrel outer face (201) thereof axially parallel or helical grooves having the depth T2, wherein axially parallel or helical, continuously extending inner ribs are newly formed by material of the pipe wall (2) and material of the inner structure formed in the first rolling step being pressed into the grooves of the second roller mandrel (200), wherein the inner ribs formed in the second shaping region are significantly more powerfully pronounced than the inner structure which was formed in the first shaping region, and wherein the protrusions (34) are formed at the tip of these inner ribs (3) from material which was pressed in the first shaping region into the grooves of the first roller mandrel (100).

10. Method according to claim 8 or claim 9, **characterised in that**, as a result of the inner structure formed in the first shaping region, the inner surface of the pipe is increased with this inner structure by at least 4% and by a maximum of 30% with respect to the inner surface of the non-formed smooth pipe (10).

11. Method according to claim 8 or claim 9, **characterised in that** the depth T2 of the grooves of the second roller mandrel (200) is at least 2.5 times as large as the depth T1 of the grooves of the first roller mandrel (100).

12. Method according to claim 8 or claim 9, **characterised in that** the flank angle of the grooves of the first roller mandrel (100) is a maximum of 120°.

## Revendications

1. Tube d'échangeur de chaleur (1) comprenant un axe de tube (A), une paroi de tube (2), un côté extérieur de tube (21) et un côté intérieur de tube (22), tube dans lequel
- sur le côté intérieur de tube (22) sont formées hors de la paroi de tube (2), des nervures intérieures (3) s'étendant de manière continue, parallèles à l'axe ou en révolution sous forme d'hélice,
- chaque nervure intérieure (3) possède deux flancs de nervure (31) et un sommet de nervure (32),
- entre des nervures intérieures (3) respectivement voisines est formée une rainure (33) s'étendant de manière continue,
- le sommet de nervure (32) présente des protubérances (34) se répétant selon des intervalles réguliers, et
- les protubérances (34) ont sensiblement une forme de tronc de pyramide,
**caractérisé**
- **en ce que** les flancs de nervure (31) des nervures intérieures (3), au niveau de la ligne de contour définie par le bord de transition d'un flanc de nervure (31) au sommet de nervure (32), sont surélevés dans la direction radiale, tandis que dans la zone du bord de transition sont formées des saillies (37) se prolongeant hors du flanc de nervure (31),
- **en ce que** les saillies (37) sont proéminentes sur les flancs inclinés (36) de la protubérance (34) dans la direction de l'étendue des nervures intérieures (3), et
- **en ce que** les surfaces latérales d'une protubérance (34) en forme de tronc de pyramide, qui s'étendent parallèlement au flanc de nervure (31), forment une transition continue sans jointure avec le flanc de nervure (31).

2. Tube d'échangeur de chaleur (1) selon la revendication 1, **caractérisé en ce qu'**au moins l'un des flancs (36) d'une protubérance (34) en forme de tronc de pyramide est de configuration concave.

3. Tube d'échangeur de chaleur (1) selon la revendication 1 ou la revendication 2, **caractérisé en ce que** les protubérances (34) en forme de tronc de pyramide sont de configuration asymétrique.

4. Tube d'échangeur de chaleur (1) selon l'une des revendications 1 à 3, **caractérisé en ce que** les protubérances (34) en forme de tronc de pyramide dépassent du creux (35) situé entre deux protubérances (34), de 20% à 100% de la hauteur des nervures intérieures (3) au niveau du creux (35).

5. Tube d'échangeur de chaleur (1) selon l'une des revendications 1 à 4, **caractérisé en ce que** l'angle de flanc α de la protubérance (34) vaut au maximum 120°.

6. Tube d'échangeur de chaleur (1) selon l'une des revendications 1 à 5, **caractérisé en ce que** sur le côté extérieur de tube (21) est réalisée une structure extérieure (4).

7. Tube d'échangeur de chaleur (1) selon l'une des revendications 1 à 6, **caractérisé en ce que** la structure extérieure (4) est réalisée sous la forme de nervures extérieures intégrales, s'étendant en révolution hélicoïdale.

8. Procédé de fabrication d'un tube d'échangeur de chaleur (1) selon l'une des revendications 1 à 5, d'après lequel sont effectuées les étapes de procédé suivantes :
a. la paroi d'un tube lisse (10) est déformée radialement dans une première zone de formage, par un premier outil de compression en révolution sur le côté extérieur du tube lisse,
b. la paroi de tube est soutenue dans la première zone de formage, par un premier mandrin de laminage (100) situé à l'intérieur du tube, qui est monté rotatif et présente sur sa surface extérieure de mandrin (101), des rainures parallèles à l'axe ou en forme d'hélice, d'une profondeur T1, une structure intérieure étant ainsi formée par pressage ou refoulement de matière de la paroi de tube dans les rainures du premier mandrin de laminage (100),
c. la paroi du tube lisse est déformée radialement dans une deuxième zone de formage, par un deuxième outil de compression en révolution sur le côté extérieur du tube lisse,
d. la paroi de tube est soutenue, dans la deuxième zone de formage, par un deuxième mandrin de laminage (200) situé à l'intérieur du tube, qui est également monté rotatif et présente sur sa surface extérieure de mandrin (201), des rainures parallèles à l'axe ou en forme d'hélice, d'une profondeur T2, des rainures intérieures parallèles à l'axe ou en forme d'hélice qui s'étendent de manière continue, étant nouvellement formées par le fait que de la matière de la paroi de tube et de la matière de la structure intérieure ayant été formée dans la première zone de formage, est pressée dans les rainures du deuxième mandrin de laminage (200), les nervures intérieures formées dans la deuxième zone de formage étant nettement plus marquées que la structure intérieure, qui a été formée dans la première zone de formage, les protubérances (34) étant formées sur le sommet de ces nervures intérieures à partir de matière, qui, dans la première zone de formage, a été pressée dans les rainures du premier mandrin de laminage (100), et une partie de la matière déformée dans la deuxième zone de formage, de la structure intérieure formée dans la première zone de formage, formant les saillies (37) en prolongement du flanc de nervure (31) au niveau du sommet des nervures intérieures (3) formées dans la deuxième étape de formage, et
e. le transport axial du tube à travers les zones de formage est assuré par un dispositif de traction.

9. Procédé de fabrication d'un tube d'échangeur de chaleur (1) selon la revendication 6 ou la revendication 7, d'après lequel sont effectuées les étapes de procédé suivantes :
a. sur le côté extérieur d'un tube lisse (10) sont formées, dans une première zone de formage, des nervures extérieures (4) s'étendant sous forme de ligne hélicoïdale, par le fait que la matière des nervures est gagnée par refoulement de matière de la paroi de tube moyennant une première étape de laminage, et le tube nervuré engendré étant mis en rotation sous l'effet des forces de laminage et soumis à une avance conformément aux nervures extérieures (4) en forme de lignes hélicoïdales, ayant été produites, les nervures extérieures (4) étant formées avec une hauteur croissante à partir du tube lisse (10) par ailleurs non déformé,
b. la paroi de tube est soutenue dans la première zone de formage, par un premier mandrin de laminage (100) situé à l'intérieur du tube, qui est monté rotatif et présente sur sa surface extérieure de mandrin, des rainures parallèles à l'axe ou en forme d'hélice, d'une profondeur T1, une structure intérieure étant ainsi formée par pressage ou refoulement de matière de la paroi de tube dans les rainures du premier mandrin de laminage (100),
c. dans une deuxième étape de laminage, les nervures extérieures (4) sont réalisées avec un accroissement de hauteur supplémentaire dans une deuxième zone de formage espacée de la première zone de formage,
d. la paroi de tube (2) est soutenue, dans la deuxième zone de formage, par un deuxième mandrin de laminage (200) situé à l'intérieur du tube, qui est également monté rotatif et présente sur sa surface extérieure de mandrin (201), des rainures parallèles à l'axe ou en forme d'hélice d'une profondeur T2, des rainures intérieures parallèles à l'axe ou en forme d'hélice, qui s'étendent de manière continue, étant nouvellement formées par le fait que de la matière de la paroi de tube (2) et de la matière de la structure intérieure ayant été formée dans la première zone de formage, est pressée dans les rainures du deuxième mandrin de laminage (200), les nervures intérieures formées dans la deuxième zone de formage étant nettement plus marquées que la structure intérieure, qui a été formée dans la première zone de formage, les protubérances (34) étant formées sur le sommet de ces nervures intérieures (3) à partir de matière, qui, dans la première zone de formage, a été pressée dans les rainures du premier mandrin de laminage (100), et une partie de la matière déformée dans la deuxième zone de formage, de la structure intérieure formée dans la première zone de formage, formant les saillies (37) en prolongement du flanc de nervure (31) au niveau du sommet des nervures intérieures (3) formées lors de la deuxième étape de formage.

10. Procédé selon la revendication 8 ou la revendication 9, **caractérisé en ce que** grâce à la structure intérieure formée dans la première zone de formage, la surface intérieure du tube est agrandie, avec cette structure intérieure, d'au moins 4% et au maximum de 30% par rapport à la surface intérieure du tube lisse (10) non déformé.

11. Procédé selon la revendication 8 ou la revendication 9, **caractérisé en ce que** la profondeur T2 des rainures du deuxième mandrin de laminage (200), est au moins 2,5 fois plus grande que la profondeur T1 des rainures du premier mandrin de laminage (100).

12. Procédé selon la revendication 8 ou la revendication 9, **caractérisé en ce que** l'angle de flanc des rainures du premier mandrin de laminage (100) vaut au maximum 120°.
